# EUROPEAN PATENT SPECIFICATION

(11) **EP 2 962 941 B1**
(45) Date of publication and mention of the grant of the patent: **24.08.2016**
(21) Application number: 14175059.6
(22) Date of filing: 30.06.2014
(51) Int. Cl.: B64F 1/20

(54) **Method for displaying dynamic visual stimuli on a runway**
Verfahren zur Anzeige von dynamischen visuellen Reizen auf einer Landebahn
Procédé d'affichage de stimulus visuels dynamiques sur une piste d'atterrissage

(43) Date of publication of application: 06.01.2016
(73) Proprietor: AIRBUS OPERATIONS (S.A.S), 31060 Toulouse (FR)
(72) Inventor: Bounaix, François, 31170 TOURNEFEUILLE (FR); Latorre-Costa, Pau, 31000 TOULOUSE (FR)

(56) References cited:
- WO-A1-2008/073322
- WO-A1-2009/136152
- US-A- 3 117 299
- US-B1- 6 193 190
- US-B1- 7 023 361

## Description

This invention relates to a method for displaying, on an airport runway, dynamic visual stimuli specific to an aircraft before and during its take-off or landing operation in order to complement the information provided visually to the flight crew of said aircraft. On-ground operations, and in particular take-off and landing, are stressful for the flight crews due to the required precision of the control inputs and the fact that a long sequence of actions and decisions have to be performed in a very short period of time by the crew. The common location on which those operations occur is the runway and during these above mentioned operations, the pilots have to constantly watch the environment of the runway and track their flight instruments, thus increasing fatigue and stress and reducing their concentration. Therefore, there is a need for a visual system that could provide flight guidance to pilots so that they can reduce the visual back and forth between the outside environment and their flight instruments.

Current visual systems exist such as basic runway illumination as described in the US patent 3117299.

Other system such as the approach lighting system (ALS) helps the pilots during landing. The ALS is a lighting system installed on the approach end of an airport runway and consisting of a series of lightbars, strobe lights, or a combination of the two that extends outward from the runway end. ALS allows the pilot to visually identify the runway environment and align the aircraft with the runway upon arriving at a prescribed point on an approach. The ALS is controlled by the air traffic control tower depending on the position of the aircraft relative to the runway given by radio signals.

Although very useful, the ALS does not take into account flight parameters such as the fuel quantity, speed, weight, type of aircraft and characteristics of the aircraft... of the aircraft that is landing. Hence, the visual information it gives is merely indicative and does not allow the pilots to reduce the back and forth between the outside environment and the flight panel.

It is an object of this invention to provide a method for illuminating a runway that at least partially meets the mentioned needs.

The method according to claim 1 aims at meeting the mentioned needs.

One advantage of the present invention is that dynamic lighting adapting to the flight parameters of the aircraft is provided on the airport in order to complement the information provided to the flight crew during the take-off and/or landing operation by dynamically displaying markers and symbols on the airport so that the pilots can reduce the visual back and forth between the outside environment and their flight instruments. The shape of the markers and the symbols adapts in real time based on the data received from the aircraft in order to provide a higher level of situational awareness to the flight crew, thus increasing safety.

The invention will now be described by way of example with reference to the accompanying drawings of which:
- Fig.1 is a schematic representation of a system for displaying dynamic visual stimuli on an airport surface to a flight crew;
- Fig.2 is a schematic representation of the visual stimuli displayed by the system of the Fig.1 prior to an aircraft reaches a V1 speed during a take-off operation;

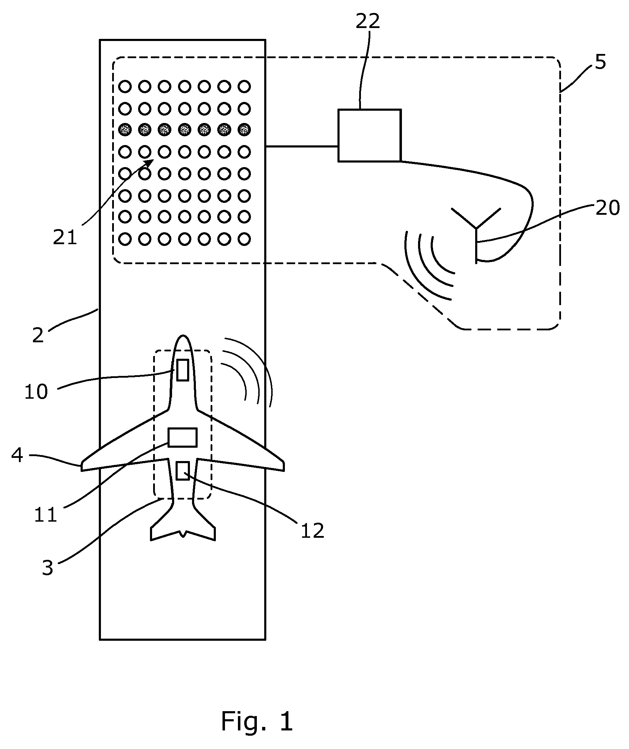

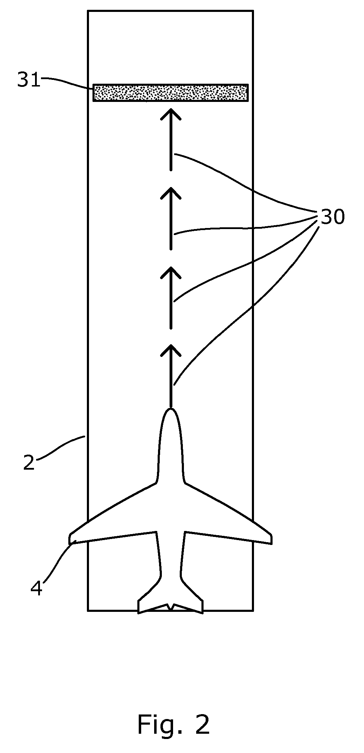

- Fig.2 is a schematic representation of the visual stimuli displayed by the system of the Fig.1 after the aircraft has reached the V speed during a take-off operation;

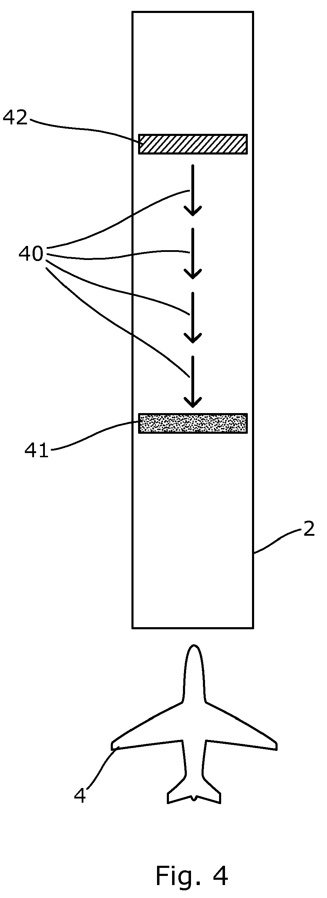

- Fig.4 is a schematic representation of the visual stimuli displayed by the system of the Fig.1 during a final approach of an aircraft during a landing operation; and

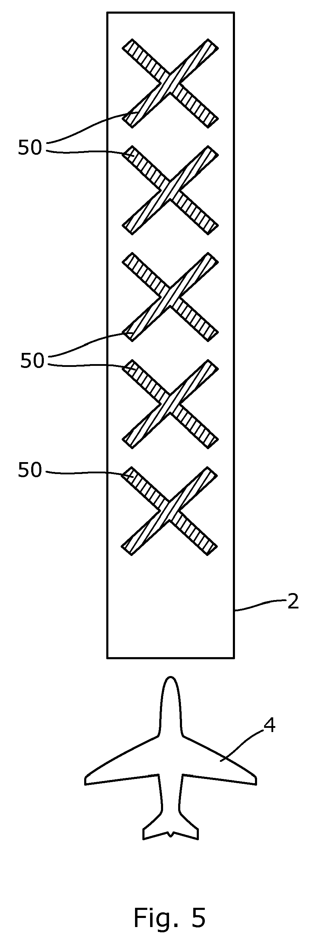

- Fig. 5 is a schematic representation of the visual stimuli displayed by the system of the Fig.1 during a landing operation when a potential overrun is detected.

With reference to FIG. 1, there is shown a system for displaying dynamic visual stimuli on the runway surface 2 of an airport comprising a module 3 on-board an aircraft 4 and a segment 5 located on the ground (airport).

The module 3 on-board the aircraft, designated thereafter on-board module, comprises an avionics application 10 and a transmitter 11 for sending data to the ground. The avionics application is, for example, hosted in a LRU (Line replaceable unit) arranged in the avionics bay of the aircraft 4. The avionics is configured to, when executed, establish a data link with the segment 5 located on the ground through the transmitter 11 so as to send flight parameters from the aircraft to the ground. Said flight parameters from the aircraft are provided to the avionics application by the avionics systems 12 of the aircraft, for instance the flight management system (FMS) and comprise at least the speed of the aircraft, the weight of the aircraft, its altitude, the current operation (take-off, landing of the aircraft). Preferably, the flight parameters also comprises the status of the flight controls surfaces of the aircraft (angle of the flaps, angle of the rudder, angle of the elevator, angle of the ailerons, deployment of the spoilers,...).

The transmitter 11 is of the type of the data link systems commonly available on the aircrafts, such as a VHF data link, a HF data link, a SATCOM data link, Wi-Fi channel, etc...

The segment 5 located on the airport, called on-ground segment, comprises a transceiver 20 for receiving the flight parameters from the on-board module 3, a plurality of lights 21 arranged on the runway and a central processing unit 22.

The transceiver 20 is compatible with the transmitter 11 and is of the type of the data link systems commonly available on the airports for exchanging data with aircrafts, such as a VHF data link, a HF data link, a SATCOM data link, Wi-Fi channel, etc...

The central processing unit 22 receives flight parameters from the transmitter 11 through the transceiver 20 and, The central processing unique treats this performance calculations to compute the coordinates on the runway surface at which the different take-off or landing (depending on the flight phase of the aircraft) constraints will occur ( for instance V1, touch down, full stop ...). Then, depending on the computed coordinates, the central processing controls the lights 21 according to instructions saved in a memory of the central processing unit 22. In the present specification, "controlling the lights" mean switching on/off the lights and/or changing their colour and/or changing their illumination.

The central processing unit 22 controls the lights 21 by sending control signals to them for displaying a least one visual stimulus on the surface of the runway.

Each visual stimulus corresponds to a predetermined illumination pattern chosen among a plurality of predetermined illumination patterns with each pattern being associated with at least a take-off/landing constraint and the coordinates on the runway surface (2) at which said constraint will occur. The plurality of predetermined illumination patterns is saved in a first database hosted in a memory of the central processing unit 22. The predetermined illumination patterns are conceived such that they represents markers and symbols that are explicit for a flight crew as it will be explained below through different examples of flight operations.

As illustrated in the example of the accompanying figures, the lights 21 are embedded on the surface of the runway 2. In this case, the lights are preferably arranged in an array that extends over the whole length of the runway. The lights 21 are for example light-emitting diodes of various colours so as to display symbols and markers in different colours to quickly inform the flight crew of the status of an operation: green when the operations are normal, red when there is a danger.

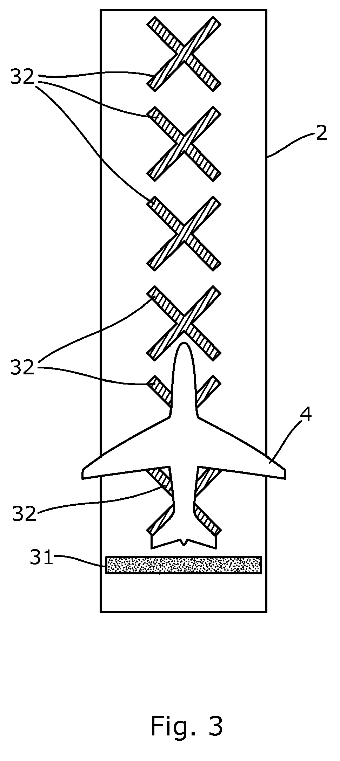

Now referring to FIG. 2 and FIG.3, the system is, for example, used during a take-off operation of an aircraft to signal to the flight crew the exact point in the runway where the V speed is expected to be achieved once the aircraft has started its run. As it is well known by a skilled person, if an aircraft reaches V1 speed during the take-off roll, the remaining runway length will not be sufficient to reject the take-off. Consequently after reaching V1 speed, the flight crew must be committed to taking off, and should not consider a rejected take off decision, as going airborne is the only safe choice.

During the take-off operations, the on-board module 3 continuously transmits flight parameters from the aircraft 4 to central processing unit 22 5 which, this way, receives constant information for computing the coordinates on the runway at which the V speed will be reached by the aircraft 4.

As a result, the central processing unit 22 controls the lights 21 to display forward facing arrows 30, leading to a line 31 which indicates the V1 point. The central processing unit 22 automatically adjusts the position of the line 31 according to values of the flight parameters transmitted by the on-board module 3.

Passed the line 31 that indicates the V1 point, when a rejected take-off is no longer an option, the central processing unit 22 controls the lights 21 to display red crosses 32 on the remaining surface of the runway as it is illustrated at Fig.3. This will inform the flight crew that the runway 2 is no longer usable and that the aircraft 4 must become airborne.

Now referring to FIG. 4 and FIG.5, the system is for example used during a landing operation of an aircraft 4. In such an operation, the avionics application 10 initiates the data link exchanges between the on-board module 3 and the on-ground segment 5 during the final approach once the aircraft has reached a threshold altitude above the runway (e.g. 1500 feet). At this point, based on the calculations provided by the on-board module 3, the central processing unit 22 commands the lights 21 for displaying backward facing arrows 40, starting at a first line 41 which depicts the calculate touchdown point and ending in a second line 42 which depicts the point, called safety point, where it is calculated that the speed of the aircraft 4 will be low enough to vacate the runway.

When the central processing unit 22 computes the coordinates of the safety point farther away from the touchdown point than the computed available distance on the runway, the central processing unit 22 changes the appearance of all symbols and markers on the runway surface to red crosses 50 (as illustrated at Fig.5), thus indicating to the flight crew that the runway 2 should not be used.

The on-ground segment 5 is remotely coupled in real time to the information from the aircraft systems so as to display symbols and markers 30-32, 40-43, 50 on the runway 2. This way, dynamic visual stimuli are displayed on the runway 2 to reinforce certain constraints and to provide additional references to the flight crews in order to increase safety.

In an example, the central processing unit 22 controls the lights 21 depending also on data relative to the status of the runway 2.

Data relative to the status of the runway 2 comprises parameters, hereinafter referred to as extra parameters, provided by ground-based sensors (not illustrated) connected to the central processing unit 22 and whose values have a direct impact on the performance of the aircraft 4 on the ground. These extra parameters are for example the rate of humidity at the ground level, the height of a water layer on the runway 2, the direction and speed of the wind at the ground level...

The central processing unit 22 receives the values of the extra parameters as input parameters in addition to the flight parameters from the aircraft and adjusts, according to computation rules saved in a memory, the computed coordinates on the runway surface at which a take-off or landing constraint of the aircraft will occur by taking into account the values of the extra parameters.

This example allows displaying stimuli on the runway 2 that are specific to both the aircraft 4 performances and the status of the runway 2.

According to various examples that are not illustrated, the lights 21 are consisting of a series of light bars, strobe lights, or a combination of the two that extends outward from the runway end and/or that extends on the sides of the runway. In a further example, the lights 21 are located on a dedicated area on the airport that is close to the runway.

## Claims

1. Method for displaying dynamic visual stimuli to a flight crew of an aircraft (4) on an airport using a plurality of lights (21), said lights being controlled by a central processing unit (22) located on the airport, the method being **characterised in that** it comprises the steps of:
- Establishing a data link between the central processing unit (22) and a module (3) on-board an aircraft which is either taking off from or landing on a runway (2) of the airport;
- Sending flight parameters from said aircraft to the central processing unit (22);
- Treating said flight parameters to compute the coordinates on the runway surface of the airport at which a take-off or a landing constraint of the aircraft will occur;
- Consulting a database in which a plurality of predetermined illumination patterns is saved, each predetermined illumination pattern of the plurality being associated to a take-off or landing constraint and the coordinates on the runway surface (2) at which said constraint will occur;
- Selecting, among the said plurality of predetermined illumination patterns, the predetermined illumination pattern corresponding to the computed coordinates on the runway surface (2) at which the take-off or the landing constraint of the aircraft will occur; and
- Controlling the lights (21) depending on the received flight parameters so as to display a predetermined illuminating pattern (30-32,40-43,50) on the airport to said flight crew.

2. Method according to claim 1, further comprising a step of adjusting the computed coordinates by taking into account data relative to the status of the runway (2) provided by ground-based sensors between the step of treating the flight data to the aircraft and the step of consulting a database.

## Patentansprüche

1. Verfahren zum Anzeigen von dynamischen visuellen Reizen für eine Flugbesatzung eines Flugzeugs (4) an einem Flughafen unter Verwendung mehrerer Lichter (21), wobei die Lichter durch eine an dem Flughafen befindliche zentrale Verarbeitungseinheit (22) gesteuert werden,
wobei das Verfahren **dadurch gekennzeichnet ist, dass** es die folgenden Schritte umfasst:
- Herstellen einer Datenverbindung zwischen der zentralen Verarbeitungseinheit (22) und einem Modul (3) an Bord eines Flugzeugs, das auf einer Start- und Landebahn (2) des Flughafens entweder startet oder landet;
- Senden von Flugparametern von dem Flugzeug an die zentrale Verarbeitungseinheit (22);
- Behandeln der Flugparameter, um die Koordinaten auf der Start- und Landebahnoberfläche des Flughafens zu berechnen, wo eine Start- oder eine Landebeschränkung des Flugzeugs auftritt;
- Konsultieren einer Datenbank, in der mehrere vorbestimmte Beleuchtungsmuster gesichert sind, wobei jedes vorbestimmte Beleuchtungsmuster der mehreren mit einer Start- oder Landebeschränkung und den Koordinaten auf der Start- und Landebahnoberfläche (2) assoziiert ist, wo die Beschränkung auftreten wird;
- Wählen, unter den mehreren vorbestimmten Beleuchtungsmustern, des vorbestimmten Beleuchtungsmusters entsprechend den berechneten Koordinaten auf der Start- und Landebahnoberfläche (2), wo die Start- oder die Landebeschränkung des Flugzeugs auftreten wird; und
- Steuern der Lichter (21) in Abhängigkeit von den empfangenen Flugparametern, um ein vorbestimmtes Beleuchtungsmuster (30-32, 40-43, 50) an dem Flughafen dem Flugpersonal anzuzeigen.

2. Verfahren nach Anspruch 1, weiterhin umfassend einen Schritt des Verstellens der berechneten Koordinaten unter Berücksichtigung von Daten relativ zum Status der Start- und Landebahn (2), bereitgestellt durch bodenbasierte Sensoren zwischen dem Schritt des Behandelns der Flugdaten zu dem Flugzeug, und dem Schritt des Konsultierens einer Datenbank.

## Revendications

1. Procédé d'affichage de stimuli visuels dynamiques à l'intention d'un personnel navigant d'un aéronef (4) sur un aéroport en utilisant une pluralité de lumières (21), lesdites lumières étant commandées par une unité centrale de traitement (22) située sur l'aéroport, le procédé étant **caractérisé en ce qu'**il comprend les étapes suivantes :
- établir une liaison de données entre l'unité centrale de traitement (22) et un module (3) à bord d'un aéronef qui est soit en train de décoller d'une piste (2) de l'aéroport, soit en train d'atterrir sur celle-ci ;
- envoyer des paramètres de vol depuis ledit aéronef vers l'unité centrale de traitement (22) ;
- traiter lesdits paramètres de vol afin de calculer les coordonnées sur la surface de la piste de l'aéroport au niveau desquelles se présentera une limitation de décollage ou d'atterrissage de l'aéronef ;
- consulter une base de données dans laquelle est sauvegardée une pluralité de motifs d'illumination prédéterminés, chaque motif d'illumination prédéterminé de la pluralité étant associé à une limitation de décollage ou d'atterrissage et aux coordonnées sur la surface de la piste (2) au niveau desquelles se présentera ladite limitation ;
- sélectionner, parmi ladite pluralité de motifs d'illumination prédéterminés, le motif d'illumination prédéterminé correspondant aux coordonnées calculées sur la surface de la piste (2) au niveau desquelles se présentera la limitation de décollage ou d'atterrissage de l'aéronef ; et
- commander les lumières (21) en fonction des paramètres de vol reçus de façon à afficher un motif d'illumination prédéterminé (30 à 32, 40 à 43, 50) sur l'aéroport, à l'intention dudit personnel navigant.

2. Procédé selon la revendication 1, comprenant en outre une étape consistant à ajuster les coordonnées calculées en prenant en compte des données relatives à l'état de la piste (2) fournies par des capteurs au sol entre l'étape de traitement des données de vol pour l'aéronef et l'étape de consultation d'une base de données.
